# EUROPÄISCHE PATENTANMELDUNG

(11) **EP 4 357 110 A1**
(43) Veröffentlichungstag der Anmeldung: **24.04.2024**
(21) Anmeldenummer: 22203145.2
(22) Anmeldetag: 21.10.2022
(51) Int. Cl.: B29C 64/141, B29C 64/165, B29C 64/223, B33Y 10/00, B33Y 30/00, B29C 64/153, B22F 10/00

(54) **VORRICHTUNG UND VERFAHREN ZUM ERZEUGEN EINER MATERIALSCHICHT FÜR DAS HERSTELLEN EINES SCHICHTSTAPELS ZUR GENERATIVEN BAUTEILFERTIGUNG**

(71) Anmelder: Fraunhofer-Gesellschaft zur Förderung der angewandten Forschung e.V., 80686 München (DE)
(72) Erfinder: GÜNTHER, Daniel, 85748 Garching (DE); BINDER, Maximilian, 85748 Garching (DE); SCHLICK, Georg, 85748 Garching (DE)
(74) Vertreter: Pfenning, Meinig & Partner mbB

(57) **Zusammenfassung**

Die Erfindung betrifft eine Vorrichtung (10) und ein Verfahren, mit:
Erzeugen einer Materialschicht (12) für das Herstellen eines Schichtstapels zur generativen Bauteilfertigung;
wobei das Erzeugen der Materialschicht (12) umfasst:
- Aufbringen einer ersten Schichtkomponente (201); und
- Aufbringen einer zweiten Schichtkomponente (202, 301, 302),

wobei mittels wenigstens einer der Schichtkomponenten (201, 202, 301, 302) eine ortsselektive Verfestigung der Materialschicht (12) erzeugbar ist; und
wobei das Erzeugen der Materialschicht (12) ferner wenigstens eine der folgenden Maßnahmen umfasst von:
a) Aufbringen der ersten Schichtkomponente (201) unter Füllen zumindest eines Anteils einer Schichtebene (E) der zu erzeugenden Materialschicht (12) und Aufbringen der zweiten Schichtkomponente (202, 301, 302) auf denselben Anteil, wobei wenigstens die zweite Schichtkomponente (202, 301, 302) in festem Zustand vorliegt;
b) Aufbringen der ersten Schichtkomponente (201) unter nicht vollständigem Füllen einer Schichtebene (E) der zu erzeugenden Materialschicht (12) und Aufbringen der zweiten Schichtkomponente (202, 301, 302) in wenigstens einem ungefüllten Anteil (18) der Schichtebene (E).

## Beschreibung

Die Erfindung betrifft eine Vorrichtung und ein Verfahren zum Erzeugen einer Materialschicht für das Herstellen eines Schichtstapels zur generativen Bauteilfertigung.

Das generative Fertigen von Bauteilen durch ortsselektives Verfestigen von Materialschichten eines Schichtstapels ist bekannt. Als beispielhafte Verfahren sind selektives Laserschmelzen und 3D-Drucken (Binder Jetting) zu nennen. Ein Beispiel findet sich in der EP 2 859 973 B1.

Bei diesen bekannten Verfahren werden Materialschichten mit typischerweise homogener Zusammensetzung in einem kontinuierlichen Vorgang erzeugt (z.B. mittels einer kontinuierlichen Bewegung einer Pulverauftragsvorrichtung entlang einer Bauplattform). Anschließend und vor dem Auftragen einer folgenden Materialschicht erfolgt eine ortsspezifische (mit anderen Worten: ortsselektive) Verfestigung der Materialschicht. Hierfür kann eine hochenergetische punktuelle Laserbestrahlung oder ein lokaler

Bindemittelauftrag erfolgen.

Obwohl derartige Verfahren etabliert sind und jeweils individuelle Vorteile besitzen, verbleibt Raum für Verbesserungen. So ist der apparative Aufwand zum Erzeugen der Verfestigung teilweise hoch und kostenintensiv. Auch können sich die etablierten Verfahren durch lange Verfahrensdauern auszeichnen.

Es ist daher eine Aufgabe der vorliegenden Erfindung, ein alternatives Vorgehen zum Erzeugen von Materialschichten eines Materialstapels für die generative Bauteilfertigung bereitzustellen und mit dem sich zumindest einige der existierenden Nachteile zumindest teilweise reduzieren lassen.

Diese Aufgabe wird durch die Gegenstände der beigefügten unabhängigen Ansprüche gelöst. Vorteilhafte Ausführungsformen sind in den abhängigen Ansprüchen sowie in dieser Beschreibung und in den Figuren definiert. Entsprechend wird ein Verfahren vorgeschlagen, umfassend das Erzeugen einer Materialschicht für das Herstellen eines Schichtstapels zur generativen Bauteilfertigung, insbesondere auf einer Bauplattform. Das Erzeugen der Materialschicht umfasst:
- Aufbringen einer ersten Schichtkomponente; und
- Aufbringen einer zweiten Schichtkomponente,
   wobei mittels wenigstens einer der Schichtkomponenten eine ortsselektive Verfestigung der Materialschicht erzeugbar ist.

Außerdem umfasst das Erzeugen der Materialschicht wenigstens eine der folgenden Maßnahmen:
a) Aufbringen der ersten Schichtkomponente unter Füllen (oder auch Ausfüllen) zumindest eines (Flächen-) Anteils einer Schichtebene der zu erzeugenden Materialschicht und Aufbringen der zweiten Schichtkomponente auf denselben (Flächen-) Anteil, wobei wenigstens die zweite Schichtkomponente in festem Zustand vorliegt;
b) Aufbringen der ersten Schichtkomponente unter nicht vollständigem Füllen einer Schichtebene der Materialschicht und Aufbringen der zweiten Schichtkomponente in wenigstens einem freigebliebenen (oder auch ungefüllten) Anteil der Schichtebene.

Die vorstehende Angabe der Maßnahmen des Verfahrens ist nicht als Definition einer zwingenden zeitlichen Abfolge zu verstehen. Zumindest ausgewählte der einzelnen Maßnahmen können auch zeitlich überlappend oder zeitlich parallel zueinander ausgeführt werden.

In an sich bekannter Weise können innerhalb des Schichtstapels mehrere Materialschichten übereinander gestapelt sein, insbesondere räumlich vertikal übereinander. Die Materialschichten können entlang einer Schichtungsachse aufeinanderfolgen (insbesondere einer vertikalen Raumachse, entlang derer die Gravitationskraft wird). Die Schichtebenen der einzelnen Materialschichten verlaufen bevorzugt parallel zueinander und/oder orthogonal zur Schichtungsachse.

Die Schichtebene kann eine Haupterstreckungsebene einer Materialschicht definieren. Eine Schichtdicke oder -stärke kann orthogonal zur Schichtebene gemessen werden.

Bei der erzeugten Materialschicht muss es sich nicht zwingend um eine Materialschicht an einer ersten (z.B. untersten) Position im Schichtstapel handeln. Es kann sich um eine Materialschicht an einer beliebigen Position im Schichtstapel handeln.

Die Bauplattform kann von einem Baubehälter umfasst sein. Die Bauplattform oder der Baubehälter können den Schichtstapel stützen und zusammenhalten, insbesondere bevor eine ortsselektive Verfestigung einzelner oder mehrerer Materialschichten erfolgt. Die Bauplattform kann eine Fläche zur Aufnahme des Stapels bereitstellen, wobei sich dieser Fläche parallel zu den Ebenen der Materialschichten erstrecken kann.

Das Erzeugen der Materialschicht auf der Bauplattform kann einen direkten Kontakt dieser Materialschicht zur Bauplattform umfassen. Die Materialschicht kann aber auch ohne direkten Kontakt zur Bauplattform auf dieser erzeugt werden, beispielsweise oberhalb von und kongruent zu der Bauplattform sowie in Kontakt mit einer bereits erzeugten Materialschicht eines zumindest teilweise fertiggestellten Schichtstapels.

Nach der Erzeugung der Materialschicht kann die Bauplattform um eine Schichtstärke oder -dicke abgesenkt werden. Danach kann ein weiterer Schichterzeugungsschritt folgen. Diese Schritte können solange wiederholt werden, bis der komplette Baukörper z.B. in schichtweise verfestigter oder in unverfestigter Form im Schichtstapel vorliegt.

Die erste und die zweite Schichtkomponente sind bevorzugt verschieden voneinander. Gemäß einer Ausführungsform liegen beide Schichtkomponenten in festem Zustand vor. Zusätzlich oder alternativ können (zumindest vor der ortsselektive Verfestigung der Materialschicht) die erste und/oder die zweite Schichtkomponente formlos sein (zum Beispiel pulverförmig oder als Schüttgut vorliegend). Insbesondere können sie vor einem Verfestigen keine zusammenhängenden oder formfesten Bereiche innerhalb der Materialschichten ausbilden.

Es kann vorgesehen sein, dass nur eine der Schichtkomponenten für eine ortsselektive Verfestigung der Materialschicht verwendbar ist. Mit der entsprechend anderen Schichtkomponente kann keine entsprechende Verfestigung erzielbar sein oder zumindest im Rahmen des Verfahrens nicht erzielt werden (beispielsweise aufgrund einer getroffenen Verfahrensparameterwahl, zum Beispiel einer Verfestigungstemperatur).

Das Verfahren kann auch einen Schritt des ortsselektiven Verfestigens der erzeugten Materialschicht umfassen. Ausführungsformen eines solchen Schritts werden nachstehend noch erläutert.

Bei der vorstehenden Variante a) kann die zweite Schichtkomponente auf dem durch Aufbringen der ersten Schichtkomponente gefüllten Anteil der Schichtebene abgelagert werden. Die erste und zweite Schichtkomponente können also räumlich überlappend und/oder innerhalb eines gemeinsamen Bereichs und/oder Flächenanteils der Materialschicht aufgebracht werden.

Dabei wird die zweite Schichtkomponente vorzugsweise innerhalb einer Schichtdicke der ersten Schichtkomponente (bzw. des hiermit erzeugten Flächenanteils) aufgenommen. Beispielsweise kann die zweite Schichtkomponente in die erste Schichtkomponente (bzw. in den hiervon erzeugten Flächenanteil) eindringen, einrieseln oder absinken. Dies kann insbesondere dadurch erreicht werden, dass wenigstens die zweite Schichtkomponente pulverförmig und/oder granular ist. Infolgedessen kann die erzeugte Materialschicht eine definierte und insbesondere konstante Dicke aufweisen, selbst wenn die zweite Schichtkomponente nur ortsspezifisch aufgebracht wird.

Der gemäß Variante a) mittels der ersten Schichtkomponente erzeugte Flächenanteil kann Zwischenräume (beispielsweise Poren, Freiräume oder Ausnehmungen) zur Aufnahme von zumindest einzelnen Partikeln der zweiten Schichtkomponente aufweisen. Wenn die erste Schichtkomponente ebenfalls pulverförmig und/oder granular ist, kann die (zum Beispiel durchschnittliche) Partikelgröße derart gewählt sein, dass eine Aufnahme von Partikeln der zweiten Schichtkomponente in Freiräumen zwischen benachbarten Partikeln der ersten Schichtkomponente möglich ist. Insbesondere kann die (zum Beispiel durchschnittliche) Partikelgröße der ersten Schichtkomponente größer sein als die (zum Beispiel durchschnittliche) Partikelgröße der zweiten Schichtkomponente, beispielsweise wenigstens fünfmal oder wenigstens zehnmal so groß.

Eine Ausführungsform gemäß der vorstehenden Variante a) sieht vor, dass mit der ersten Schichtkomponente eine zusammenhängende oder geschlossene Schicht erzeugt wird. Insbesondere kann die erste Schichtkomponente eine gesamte Fläche der Materialschicht erzeugen oder einnehmen (d. h. der mittels dieser Schichtkomponente gefüllte Flächenanteil der Schichtebene kann 100 % betragen).

Zusätzlich oder alternativ kann die zweite Schichtkomponente ausschließlich auf mittels der ersten Schichtkomponente erzeugten Flächenanteilen aufgetragen werden. Sie kann also insbesondere nicht räumlich getrennt von der ersten Schichtkomponente und/oder unter Erzeugung eigenständiger Flächenanteile der Materialschicht aufgetragen werden.

Bei der vorstehenden Variante b) kann kein Aufbringen der zweiten Schichtkomponente auf mittels der ersten Schichtkomponente erzeugten Flächenanteilen erfolgen.

Es können jedoch auch Mischformen der Varianten a) und b) vorgesehen sein. Zum Beispiel kann wenigstens ein Bereich der Materialschicht gemäß Variante a) und wenigstens ein anderer Bereich der Materialschicht gemäß Variante b) erzeugt werden.

Insbesondere kann bei der Variante b) ein Aufbringen der ersten Schichtkomponente unter Erzeugen mehrerer räumlich getrennter Flächenanteile der Materialschicht vorgesehen sein und ein Aufbringen der zweiten Schichtkomponente in wenigstens einen Bereich zwischen wenigstens zwei der Flächenanteile. Anders ausgedrückt kann die zweite Schichtkomponente noch verbleibenden Löcher oder Freiräume innerhalb der Schichtebene ausfüllen. Gemäß einer Variante erfolgt dies derart, dass im Ergebnis die gesamte Schichtebene der Materialschicht ausgefüllt ist und keine ungefüllten Bereiche verbleiben.

Bei der Variante b) weisen die Schichtkomponenten vorzugsweise vergleichbare Größen (beispielsweise Partikelgrößen) und/oder Dicken zum Herstellen einer gleichmäßigen Schichtdicke auf.

Gemäß einer Ausführungsform ist wenigstens eine von erster und zweiter Schichtkomponente pulverförmig oder, mit anderen Worten, partikelförmig oder granular.

Gemäß einer Variante umfasst wenigstens eine von erster und zweiter Schichtkomponente wenigstens einen plattenförmigen Materialabschnitt, oder, mit anderen Worten, einen zusammenhängenden formstabilen Körper, insbesondere aufweisend ein homogene Materialzusammensetzung.

Beispielsweise kann der plattenförmige Materialabschnitt ein festes Material, insbesondere einen Kunststoff, eine Folie oder ein Keramikpapier umfassen. Insbesondere kann er aus einem solchen Material herausgetrennt werden (zum Beispiel ausgeschnitten). Ein solches Heraustrennen kann (insbesondere bei anschließender Entfernung von abgetrenntem Restmaterial) auf der Bauplattform oder aber räumlich getrennt hiervon erfolgen.

Der plattenförmige Materialabschnitt kann Ausnehmungen und insbesondere Durchbrechungen oder Freiräume zur Aufnahme der anschließend aufgebrachten zweiten Schichtkomponente aufweisen. Der plattenförmige Materialabschnitt kann folglich als Form und/oder Maske für die zweite Schichtkomponente dienen.

Eine Weiterbildung sieht vor, dass das Aufbringen von wenigstens einer der Schichtkomponenten umfasst: gleichzeitiges Aufbringen dieser Schichtkomponente an wenigstens zwei beabstandeten Positionen (in der Schichtebene). Hierfür können zum Beispiel mehrere Aufbringvorrichtungen die Schichtkomponente an jeweils einer der beabstandeten Positionen aufbringen, insbesondere gleichzeitig. Alternativ kann eine einzige Aufbringvorrichtung die Schichtkomponente örtlich verteilt aufnehmen und in einem vorzugsweise gemeinsamen Schritt in den beabstandeten Positionen aufbringen. Hierdurch kann die Verfahrensdauer reduziert werden.

Alternativ oder zusätzlich kann das Aufbringen von wenigstens einer der Schichtkomponenten umfassen: gleichzeitiges Aufbringen dieser Schichtkomponente an der Mehrheit von oder an sämtlichen vorgesehenen Positionen innerhalb der Schichtebene. In diesem Fall können die Positionen örtlich getrennt (d.h. beabstandet) sein oder sie können innerhalb eines gemeinsamen und mit dieser Schichtkomponente erzeugten Flächenanteils der Materialschicht liegen. Es können Aufbringvorrichtungen gemäß jeglicher hierin offenbarten Variante zum Einsatz kommen. Auch in diesem Fall kann eine Reduzierung der Verfahrensdauer erzielt werden.

Gemäß einer Variante wird die Schichtkomponente von einer Aufbringvorrichtung mit einer örtlichen Verteilung aufgenommen und unter Aufrechterhaltung dieser örtlichen Verteilung aufgebracht (insbesondere auf der Bauplattform mit dieser örtlichen Verteilung abgelagert). Die örtliche Verteilung kann eine wenigstens zweidimensionale Verteilung oder auch eine räumliche Verteilung umfassen.

Hierfür kann die Aufbringvorrichtung die Schichtkomponente zum Beispiel mittels elektrostatischer Anziehungskräfte und/oder Unterdruck aufnehmen. Insbesondere können diese Anziehungskräfte (bzw. kann dieser Unterdruck) ortsspezifisch und entsprechend der örtlichen Verteilung erzeugt werden.

Beispielsweise kann die Aufbringvorrichtung eine Platte (auch als Transferplatte bezeichnet) oder eine Rolle umfassen, die entsprechend der gewünschten örtlichen Verteilung ortsabhängig elektrostatisch aufgeladen werden. Alternativ kann zum Beispiel mittels verteilter Ventile (z.B. umfassend Piezoaktoren) ein Unterdruck entsprechend der örtlichen Verteilung ortsabhängig an oder nahe einer Oberfläche der Rolle oder Platte erzeugt werden. Diese Oberfläche kann z.B. von einem Sieb umfasst oder allgemein perforiert sein.

Auf diese Weise kann die Aufbringvorrichtung die Schichtkomponente zum Beispiel einem Materialreservoir unter Herstellung der gewünschten örtlichen Verteilung entnehmen und diese örtliche Verteilung in die Schichtebene der herzustellenden Materialschicht übertragen. Hierfür kann die Aufbringvorrichtung oberhalb der Bauplattform positioniert werden und/oder entlang dieser bewegt werden und dabei die Schichtkomponente (insbesondere Partikel hiervon) ortsspezifisch freigeben. Dies kann ein Überwinden der elektrostatischen Anziehungskräfte umfassen, wenn die Schichtkomponente (insbesondere Partikel hiervon) in Kontakt mit der Bauplattform und/oder einer zuvor hergestellten Materialschicht kommt, ein aktives Abbauen der elektrostatischen Anziehungskräfte oder ein Überwinden oder aktives Abbauen des Unterdrucks umfassen (oder auch Erzeugen eines Überdrucks oder elektrostatischer Abstoßungskräfte).

Erfindungsgemäß wurde erkannt, dass das Aufnehmen und Ablagern von Partikeln unter Erzeugung und Aufrechterhaltung einer örtlichen Verteilung mittels elektrostatischer Anziehungskräfte im Kontext schichtweiser generativer Fertigungsverfahren vorteilhaft ist. Derartige Lösungen sind bisher nur aus entfernten technischen Gebieten bekannt, beispielsweise im Kontext von Druckverfahren oder der Elektrophotographie.

Durch die Nutzung mehrerer Aufbringvorrichtungen können die Schichtkomponenten gelichzeitig oder kann eine Schichtkomponente gleichzeitig an räumlich getrennten Positionen in der Schichtebene aufgetragen werden. Ist eine Mehrzahl von Aufbringvorrichtungen (unabhängig von deren Konfiguration) vorgesehen, können diese an verschiedenen beweglichen Einheiten (z. B. Linearachsen) positioniert sein. Von diesen können sie gleichzeitig oder nacheinander zwecks Schichtkomponentenauftrag bewegt werden. Die Aufbringvorrichtungen können aber auch an einer gemeinsamen beweglichen Einheit angeordnet sein, was insbesondere einen gelichzeitigen Auftrag der von den Aufbringvorrichtungen jeweils aufgenommenen Schichtkomponenten ermöglicht.

Eine Weiterbildung sieht vor, dass die Aufbringvorrichtung nach Aufbringen der Schichtkomponente eine weitere Menge der Schichtkomponente (oder ein weiteres Volumen) zum Erzeugen einer weiteren Materialschicht aufnimmt, während das Erzeugen der (aktuell zu erzeugenden) Materialschicht noch nicht abgeschlossen ist (zum Beispiel da noch der Auftrag einer weiteren Schichtkomponente in der aktuellen Schichtebene aussteht). Anders ausgedrückt kann die Aufbringvorrichtung nach Aufbringen der Schichtkomponente in einer aktuell herzustellenden Materialschicht bereits die Herstellung einer darauf folgenden Materialschicht vorbereiten. Hierfür kann sie die Schichtkomponente insbesondere unter Herstellen der gewünschten örtlichen Verteilung aufnehmen und/oder bereithalten, während beispielsweise noch die entsprechend andere Schichtkomponente zur Herstellung der aktuellen Materialschicht aufgebracht wird. Dies ermöglicht eine Parallelisierung von Verfahrensschritten und somit eine Reduzierung der Herstellerdauer des Schichtstapels.

Zusätzlich oder alternativ kann vorgesehen sein, dass für wenigstens eine der Schichtkomponenten eine Mehrzahl von Aufbringvorrichtungen bereitgestellt ist. Die Aufbringvorrichtungen können gleichartig ausgebildet sein und/oder können gemäß jeglicher hierin offenbarten Variante ausgebildet sein. Sind mehrere Aufbringvorrichtungen vorgesehen, können diese gleichzeitig die Schichtkomponente an unterschiedlichen Positionen innerhalb der Schichtebene aufbringen. Zusätzlich oder alternativ kann wenigstens eine der Aufbringvorrichtungen die Schichtkomponente zum Herstellen einer darauffolgenden Schicht aufnehmen, während die Herstellung der aktuellen Materialschicht noch nicht abgeschlossen ist (und insbesondere während die entsprechend andere Aufbringvorrichtung die Schichtkomponente in der aktuell herzustellenden Schicht aufbringt). Auch hierdurch kann die Herstellung des Schichtstapels reduziert werden.

Gemäß einer weiteren Ausführungsform ist vorgesehen, dass die erste Schichtkomponente und die zweite Schichtkomponente mit derselben Aufbringvorrichtung aufgebracht werden. Dies kann die Anlagekosten reduzieren.

Alternativ kann die erste Schichtkomponente mit wenigstens einer ersten Aufbringvorrichtung und die zweite Schichtkomponente mit wenigstens einer zweiten Aufbringvorrichtung aufgebracht werden. Hierdurch können die erforderlichen Schritte zum Aufnehmen und/oder Aufbringen der Schichtkomponenten zumindest teilweise parallelisiert werden, was die Verfahrensdauer entsprechend reduziert.

Das Verfahren kann ferner ein Verfestigen der Materialschicht insbesondere durch Wärmezufuhr umfassen. Die Wärmezufuhr kann beispielsweise durch Anordnen des hergestellten Schichtstapels in einem Ofen oder einer erwärmten Umgebung erfolgen oder aber mittels Wärmelampen oder Laserbestrahlung. Es kann jedoch nicht erforderlich sein, die Wärmezufuhr ortsspezifisch nur an den zu verfestigenden Stellen zu erzeugen. Stattdessen kann die Wärmezufuhr ungerichtet und/oder derart erfolgen, dass sie im Wesentlichen den gesamten Schichtstapel gleichzeitig erfasst. Dies reduziert den anlagetechnischen Aufwand entsprechend.

In diesem Zusammenhang kann vorgesehen sein, dass das Verfestigen schichtweise erfolgt. Jede Materialschicht des Schichtstapels kann demnach nach ihrer Herstellung (und vor Aufbringen einer weiteren darauffolgenden Materialschicht) verfestigt werden. Dies kann wiederum unter Wärmezufuhr gemäß jeglicher hierin geschilderten Variante erfolgen. Mit dem schichtweisen Verfestigen kann eine hohe Fertigungsgüte erzielt werden.

Alternativ kann das Verfestigen nach Herstellung mehrerer oder sämtlicher Materialschichten des Schichtstapels erfolgen, d.h. können mehrere Materialschichten gemeinsam verfestigt werden. Dies kann die Verfahrensdauer entsprechend reduzieren. Insbesondere kann vorgesehen sein, einen ersten (Teil-)Schichtstapel zu erzeugen, dessen Materialschichten gemeinsam und insbesondere durch Wärmezufuhr zu verfestigen und anschließend wenigstens eine weitere Materialschicht auf den verfestigten (Teil-)Schichtstapel aufzubringen und ebenfalls zu verfestigen.

Es ist darauf hinweisen, dass im Rahmen des Verfestigens nur eine der Schichtkomponenten (insbesondere Partikel hiervon) oder aber die Schichtkomponenten untereinander ortsspezifisch verfestigen kann bzw. können. Das Verfestigen kann innerhalb nur einer Materialschicht oder aber materialschichtübergreifend und insbesondere unter Verfestigen /und oder Verbinden mit wenigstens einer angrenzenden Materialschicht erfolgen.

Mögliche Verfestigungsvorgänge umfassen Sintern, Oxidation, Polymerisation, sowie Aufschmelzen mit anschließender Erstarrung.

Wenigstens eine der Schichtkomponenten kann wenigstens eines der folgenden Materialien umfassen:
- ein Metall, insbesondere eine Metalllegierung, zum Beispiel: Eisen; Stahl (bspw. Edelstahl (z.B. 316L) oder hochlegierten Stahl); Aluminium und seine Legierungen; Magnesium und seine Legierungen; sowie jeweils als Reinmetall oder in legierter Form: Titan, Wolfram, Nickel, Molybdän, Kupfer, Bronze, Messing, Neusilber, Zink, Wismut, Blei oder Zinn;
- ein keramisches Material, zum Beispiel: Oxidkeramik, insbesondere umfassend Al₂O₃, SiO₄ oder Titanoxid (TiO); Nitridkeramik; Carbidkeramiken; Silikatkeramik;
- ein anorganisches Material, zum Beispiel: Mullit; Steatit; Salz (z.B. NaCI, KaCl); ein mineralisches Material; Zement; Beton; Gips; Sand; künstlicher Sand; Bauxit; Roherz, z.B. Chromerz;
- einen Kunststoff, insbesondere ein Polymer, zum Beispiel: PE; PP; POM; PA (insbesondere PA12, PA11 und PA 6.6); PVDF; PET; PTFE; PEEK; PEAK; PU (in harten wie elastischen Varianten), insbesondere thermoplastisches PU; PMMA; PEMA; PC; PC-ABS-Mischwerkstoff; ABS;
- ein organisches Material, zum Beispiel: Holz; Flachsfaser; Baumwollfaser; Stärke; Celluloseacetat; Wachs; Carbonfaser; Glasfaser;
- einen Mehrkomponentenwerkstoff (insbesondere umfassend wenigstes ein Material gemäß vorstehenden Beispielen), zum Beispiel: gefüllte Partikel, wobei Partikel und Füllung unterschiedliche Materialien umfassen; faserverstärkte Partikel, wobei Partikel und Fasern unterschiedliche Materialien umfassen; umhüllte Partikel, wobei Partikel und Hülle unterschiedliche Materialien umfassen; Mehrphasenpartikel; Partikelmischungen; oberflächenmodifizierte Partikel; Partikel mit Nanobeschichtungen.

Die erste und zweite Schichtkomponente können gemäß jeglichen der vorstehenden Beispiele gewählt sein und beliebig kombiniert werden.

Gemäß einem weiteren Aspekt umfassen die erste und zweite Schichtkomponente im Vergleich unterschiedliche Materialien. Anders ausgedrückt kann die erste Schichtkomponente ein erstes Material und die zweite Schichtkomponente ein zweites, von dem ersten Material unterschiedliches Material umfassen. Hierdurch kann besonders zuverlässig die verfestigende Eignung (insbesondere nur) einer der Schichtkomponenten bereitgestellt werden.

Alternativ können die erste und zweite Schichtkomponente wenigstens ein gleichartiges Material umfassen, dessen Materialform und/oder Partikelform und/oder Partikelgrößenverteilung voneinander unterschiedlich ist. Die Materialform kann insbesondere eine Form oder einen Zustand als zusammenhängendes Festmaterial, als Schüttgut, als Pulver oder Granulat umfassen. Die Partikelform kann zum Beispiel ein sphärische Form, eine Bruchstückform, ein aus unregelmäßiger Ablagerung oder Erstarrung resultierende Form (z.B. spritzerförmig) oder eine aus Fällung resultierende Form umfassen.

Durch Bereitstellen eines gleichartigen Materials, aber mit unterschiedlichen Eigenschaften der vorstehend genannten Art, kann das Verfestigungsverhalten der Schichtkomponenten definiert eingestellt und insbesondere voneinander differenziert werden. Hierdurch kann ermöglicht werden, dass bei Festlegung von Verfestigungsparametern (insbesondere einer Temperatur) nur eine der Schichtkomponente verfestigt. Die andere Schichtkomponente kann hingegen eine rein stützende Funktion besitzen und nicht Bestandteil des herzustellenden Bauteils werden.

Die Erfindung betrifft auch eine Vorrichtung zum Erzeugen einer Materialschicht für das Herstellen eines Schichtstapels zur generativen Bauteilfertigung; wobei die Vorrichtung dazu eingerichtet eine erste Schichtkomponente aufzubringen und eine zweite Schichtkomponente aufzubringen (z.B. auf eine Bauplattform), wobei mittels wenigstens einer der Schichtkomponenten eine ortsselektive Verfestigung der Materialschicht erzeugbar ist; und wobei die Vorrichtung für wenigstens eine der folgenden Maßnahmen (d.h. zum Ausführen wenigstens einer der folgenden Maßnahmen) eingerichtet ist:
a) Aufbringen der ersten Schichtkomponente unter Füllen (oder auch Ausfüllen) zumindest eines (Flächen-) Anteils einer Schichtebene der zu erzeugenden Materialschicht und Aufbringen der zweiten Schichtkomponente auf denselben (Flächen-) Anteil, wobei wenigstens die zweite Schichtkomponente in festem Zustand vorliegt;
b) Aufbringen der ersten Schichtkomponente unter nicht vollständigem Füllen einer Schichtebene der Materialschicht und Aufbringen der zweiten Schichtkomponente in wenigstens einem freigebliebenen (oder auch ungefüllten) Anteil der Schichtebene.

Die Vorrichtung kann dazu eingerichtet sein, ein Verfahren gemäß jeglicher hier offenbarter Variante auszuführen. Sämtliche Erläuterungen, Merkmale und Varianten im Kontext des Verfahrens können auch auf die Vorrichtung zutreffen, und umgekehrt.

Insbesondere kann die Vorrichtung die Bauteilplattform umfassen. Sie kann (zusätzlich oder alternativ) wenigstens eine Aufbringvorrichtung gemäß jeglicher hierin offenbarten Variante umfassen, insbesondere mehrere Aufbringvorrichtungen zum Erzielen einer Parallelisierung einzelner Verfahrensschritte.

Die Vorrichtung kann auch wenigstens eine Wärmquelle zum Zuführen von Wärme zwecks Verfestigung umfassen. Alternativ kann sie z.B. eine Transfervorrichtung zum Transferieren der Bauplattform zu einer entsprechenden Wärmquelle umfassen.

Mit dem hier offenbarten Verfahren und der offenbarten Vorrichtung kann eine direkte Erzeugung von Gebrauchsgegenständen erfolgen, insbesondere von Gegenstände umfassend Hybridwerkstoffe mit Kunststoffmatrix; Grünteilen für anschließende Sinterverfahren, homogenen Kunststoffbauteilen; inhomogenen Polymerbauteilen (z. B. Compounds oder faserverstärkte Bauteile); Gegenständen aus Beton, Zement oder Gips für Dekorations- und Architekturanwendungen; Keramikteile für Medizintechnik und Dentaltechnik; Metallbauteile für Maschinenbauanwendungen oder den Elektromotorenbau; Bearbeitungswerkzeuge umfassend Hochleistungswerkstoffe; Gegenstände umfassend Metall-Matrix-Composites.

Ebenso können mit dem hier offenbarten Verfahren und der offenbarten Vorrichtung Werkzeuge zur Formgebung für einen ein- und mehrmaligen Gebrauch hergestellt werden. Dies umfasst z. B. Werkzeuge für das Umformen von Kunststoffbauteilen durch Thermoformen; Spritzgusswerkzeuge aus Keramiken oder metallischen Werkstoffen; Feingusspositive aus Wachs oder Kunststoffen; Kokillen; Sandformen; Kerne zum einmaligen Gebrauch aus Sand; Sandformen mit verschiedenen Sandtypen in einem Bauteil; Formteile für die gesteigerte Abfuhr von Prozesswärme.

Ebenso können mit dem hier offenbarten Verfahren und der offenbarten Vorrichtung Halbzeuge hergestellt werden, welche im Rahmen von nachbearbeitenden Schritten zu einem verwendbaren Bauteil verarbeitet werden. Dies umfasst das Ausschmelzen oder Auswaschen von passiven Materialien (insbesondere einer nicht verfestigten Schichtkomponente) in einem aus dem Schichtstapel erzeugten Materialverbund. Auch können unterschiedliche Materialeigenschaften der Schichtkomponenten genutzt werden, um selektive Beschichtungsprozesse zu aktivieren oder deaktivieren. Auch können unterschiedliche Materialeigenschaften der Schichtkomponenten genutzt werden, um im Rahmen von subtraktiven Prozessen (wie zum Beispiel Ätzen, Polieren, Schleifen oder Läppen) in unterschiedlichem Ausmaß abgetragen zu werden. Dadurch kann eine finale oder prozessweiterführende Geometrie des Bauteils erzeugt werden.

Die Erfindung wird im Folgenden anhand der beigefügten schematischen Figuren erläutert. Für gleiche oder vergleichbare Merkmale können figurenübergreifend dieselben Bezugszeichen verwendet werden.
- Figur 1: zeigt das Herstellen einer Materialschicht gemäß einer ersten Ausführungsform des erfindungsgemäßen Verfahrens sowie mit einer erfindungsgemäßen Vorrichtung,
- Figur 2: zeigt das Herstellen einer Materialschicht gemäßer einer zweiten Ausführungsform des erfindungsgemäßen Verfahrens sowie mit einer erfindungsgemäßen Vorrichtung,
- Figur 3: zeigt das Herstellen einer Materialschicht gemäßer einer dritten Ausführungsform des erfindungsgemäßen Verfahrens sowie mit einer erfindungsgemäßen Vorrichtung,
- Figur 4: zeigt eine alternative Aufbringvorrichtung zur Verwendung in einer erfindungsgemäßen Vorrichtung,
- Figur 5: zeigt eine weitere Variante einer erfindungsgemäßen Vorrichtung.

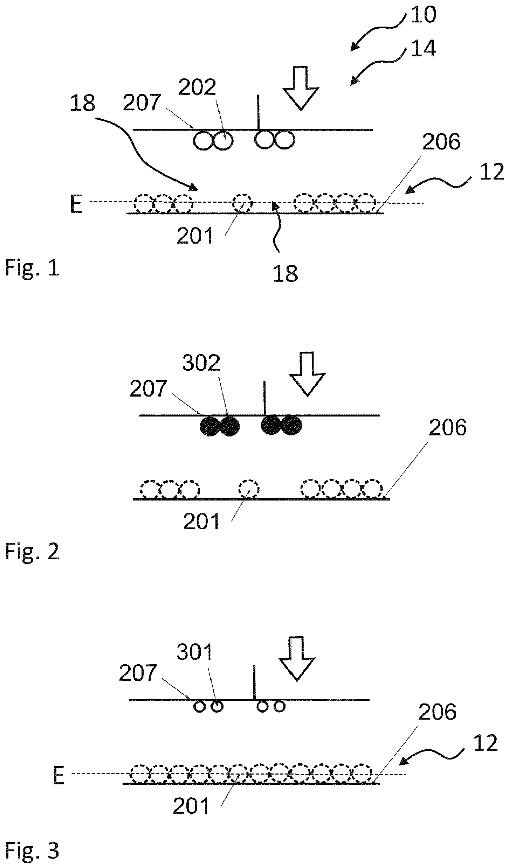

In Figur 1 ist eine erfindungsgemäße Vorrichtung 10 gemäß einem ersten Ausführungsbeispiel gezeigt, wobei die Vorrichtung 10 ein erfindungsgemäßes Verfahren zum Erzeugen einer Materialschicht 12 eines Schichtstapels für eine generative Bauteilfertigung ausführt. Die Materialschicht 12 wird aus pulverförmigen festen Schichtkomponenten 201, 202 erzeugt.

Die Vorrichtung 10 umfasst eine Bauplattform 206, die Teil eines ansonsten nicht dargestellten Baubehälters ist. Es ist darauf hinzuweisen, dass in der gezeigten Darstellung eine unterste Materialschicht 12 innerhalb eines Schichtstapels erzeugt wird. Dies ist jedoch nicht zwingend. Es kann auch eine andere Materialschicht innerhalb des Schichtstapels erzeugt werden, wobei das Bezugszeichen 206 dann eine im Schichtstapel vorangehende bereits erzeugte Materialschicht 12 anzeigt.

Die Vorrichtung 10 umfasst auch eine Aufbringvorrichtung 14. Diese umfasst eine Transferplatte 207 mit einer der Bauplattform 206 zugewandten Oberfläche und insbesondere Unterseite. Die Transferplatte 207 ist ortsabhängig elektrostatisch aufladbar. An den Positionen mit elektrostatischer Aufladung können Materialpartikel anhaften und dadurch von der Transferplatte 207 aufgenommen werden. Durch Reduzieren oder Umkehren der elektrostatischen Aufladung können die Materialpartikel wieder freigegeben und in der Umgebung unter Aufrechterhaltung der örtlichen Verteilung abgelagert und aufgebracht werden

In dem gezeigten Verfahrenszustand hat die Aufbringvorrichtung 14 bereits (lediglich beispielhaft sphärische) Materialpartikel einer ersten Schichtkomponente 201 mit einer definierten örtlichen Verteilung aufgenommenen und unter Aufrechterhaltung dieser Verteilung auf der Bauplattform 206 aufgebracht. Die örtliche Verteilung der ersten Schichtkomponente 201 ist dabei derart definiert, dass die Schichtkomponente 201 eine Schichtebene E der herzustellenden Materialschicht 12 nicht vollständig ausfüllt. Stattdessen sind innerhalb der Schichtebene E freibleibenden Bereiche (d.h. unausgefüllte (Flächen-) Anteile der Schichtebene E) oder auch Zwischenräume 18 vorhanden.

Wie gezeigt, nimmt die Aufbringvorrichtung 14 Partikel einer zweiten Schichtkomponente 202 mit einer zu den Positionen dieser Freiräume 18 korrespondierenden örtlichen Verteilung auf. Anders ausgedrückt sind die Partikel der zweiten Schichtkomponente 202 derart positioniert, dass sie bei Absenken der Aufbringvorrichtung 14 in Richtung der Bauplattform 206 (siehe Pfeil in Figur 1) in den Zwischenräumen 18 aufgenommen werden und diese ausfüllen. Vorzugsweise wird die Schichtebene E dadurch vollständig ausgefüllt.

In dem gezeigten Beispiel ist die zweite Schichtkomponente 202 im Rahmen eines anschließenden Erwärmungsschritts verfestigbar, beispielsweise da sie bei einer gewählten Temperatur durch Sintern verfestigt. Alternativ kann sie von einem bei der Erwärmung schmelzenden (und bei Abkühlung wiederum verfestigenden) Material umhüllt sein, beispielsweise einem Polymermaterial.

Die erste Schichtkomponente 201 kann aus dem gleichen Material wie die zweite Schichtkomponente 202 hergestellt sein. Sie kann jedoch bei der gewählten Temperatur nicht verfestigen, beispielsweise da sie die aufschmelzbare Umhüllung der ersten Schichtkomponente 201 nicht aufweist.

Folglich dient die zweite Schichtkomponente 202 als passive Stabilisierungskomponente des Schichtstapels und als Positionierungshilfe der ersten Schichtkomponente 201, wird aber nicht Bestandteil des hergestellten Bauteils. Stattdessen kann die unverfestigte zwei Schichtkomponente 202 nach Bauteilherstellung mit Druckluft abgeblasen oder anderweitig entfernt werden.

Wie im allgemeinen Beschreibungsteil erläutert, kann das Verfestigen schichtweise nach Fertigstellung einer jeden Materialschicht 12 erfolgen. Alternativ kann das Verfestigen nach Herstellung des gesamten oder zumindest eines Teils des Schichtstapels erfolgen, insbesondere sodass mehrere Materialschichten 12 gleichzeitig und gegebenenfalls auch untereinander verfestigen.

Das Beispiel in Figur 2 entspricht weitestgehend der Ausführungsform von Figur 1, mit dem Unterschied, dass eine verfestigbare zweite Schichtkomponente 302 vollständig aus einem andersartigen Material besteht als eine erste, nicht verfestigbare Schichtkomponente 201.

Auch das Beispiel in Figur 3 entspricht weitestgehend der Ausführungsform von Figur 1, mit dem Unterschied, dass eine zunächst aufgebrachte erste Schichtkomponente 201 die Schichtebene E vollständig ausfüllt. Eine zweite Schichtkomponente 301 wird wiederum von der Aufbringvorrichtung 14 mit einer definierten örtlichen Verteilung aufgenommen und in der Schichtebene E positioniert. Hierbei sind die Größenverhältnisse der Partikel der ersten Schichtkomponente 201 und der zweiten Schichtkomponente 301 derart gewählt, dass eine (in vertikaler Raumrichtungen gemessene) Schichtdicke von den Partikeln der ersten Schichtkomponente 201 festgelegt wird. Die Partikel der zweiten Schichtkomponente 301 weisen zum Beispiel einen Durchmesser auf, der maximal einem Zehntel des Durchmessers der Partikel der ersten Schichtkomponente 201 entspricht. Sie können daher in Zwischenräume zwischen den Partikeln der ersten Schichtkomponente 201 rutschen, ohne die Schichtdicke zu erhöhen.

Die Partikel der zweiten Schichtkomponente 301 können aufgrund ihrer reduzierten Größe bei niedrigeren Temperaturen schmelzen und/oder sintern als die Partikel der ersten Schichtkomponente 201. Dies ermöglicht, dass die erste und zweite Schichtkomponente 201, 301 aus demselben Material hergestellt werden, was jedoch nicht zwingend ist. In jedem Fall ist erneut vorgesehen, dass die zweite Schichtkomponente 301 in einem anschließenden Verfestigungsschritt und einer dort gewählten Temperatur verfestigbar ist, nicht jedoch die erste Schichtkomponente 201.

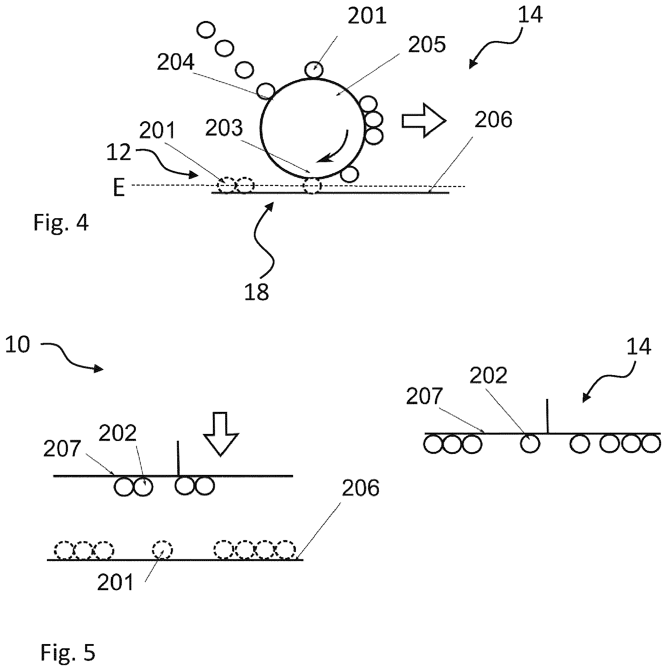

Figur 4 ist eine Prinzipdarstellung für eine alternative Ausgestaltung der Aufbringvorrichtung 14. Die Aufbringvorrichtung 14 umfasst in diesem Fall eine rotierende Walze 205, deren Umfangsfläche ortsselektiv elektrostatisch aufladbar ist oder an deren Umfangsfläche ortsselektiv ein Unterdruck erzeugbar ist. Eine beispielhafte und entsprechend zur Partikelaufnahme eingerichtete Position an der Walzenoberfläche ist mit 204 markiert.

Erneut können daher Partikel 202 mit einer örtlichen Verteilung aufgenommen und mit dieser örtlichen Verteilung auf der Bauplattform 206 (oder einer vorangehenden Materialschicht 12) aufgebracht werden. Hierfür wird die Walze 205 entlang der Bauplattform 206 bewegt und abgerollt (sh. Bewegungspfeile in Fig. 4)

In dem gezeigten Zustand wird ein beispielhafter Partikel 203 von der Walze 205 auf die Bauplattform 206 aufgebracht. Dies erfolgt wiederum unter Herstellung einer nicht vollständig ausgefüllten Schichtebene E. In einem darauffolgenden Verfahrensschicht kann dieselbe oder eine andere Walze 205 eine weitere Schichtkomponente 202 unter Ausfüllen vorhandener Zwischenräume 18 aufbringen, ähnlich dem vorangehenden Ausführungsbeispiel aus Figur 1.

In Figur 5 ist eine weitere Ausführungsform einer erfindungsgemäßen Vorrichtung 10 gezeigt. Diese ist im Wesentlichen analog zur Vorrichtung 10 der Figur 1 ausgebildet. Ein Unterschied ist, dass die Vorrichtung 10 eine Mehrzahl von Aufbringvorrichtung 14 umfasst. Diese werden derart parallel betrieben, dass eine der Aufbringvorrichtung 14 eine aktuell zu erzeugende Materialschicht 12 herstellt, d. h. darin die zweite Schichtkomponente 202 ablagert. Die zweite Aufbringvorrichtung 14 bereitet hingegen das Erzeugen der nachfolgenden Materialschicht 12 vor. Hierfür nimmt sie ein weiteres Volumen bzw. einer weitere Menge der zweiten Schichtkomponente 202 mit der gewünschten örtlichen Verteilung auf, auch wenn die Herstellung der vorangehenden bzw. aktuell erzeugten Materialschicht 12 noch nicht vollständig abgeschlossen ist.

Dies ermöglicht eine teilweise Parallelisierung der Verfahrensschritte zum Herstellen aufeinanderfolgender Materialschichten 12 und dadurch eine Reduzierung der Verfahrensdauer.

### Bezugszeichenliste

- 10: Vorrichtung
- 12: Materialschicht
- 14: Aufbringvorrichtung
- 18: Zwischenraum / ungefüllter Anteil
- E: Schichtebene
- 201: erste Schichtkomponenten
- 202: zweite Schichtkomponente
- 203: Position mit Partikelabgabe
- 204: Position mit Partikelaufnahme
- 205: Walze
- 206: Bauplattform (oder bereits erzeugte Schicht)
- 207: Transferplatte
- 301: zweite Schichtkomponente
- 302: zweite Schichtkomponente

## Patentansprüche

1. Verfahren, mit:
Erzeugen einer Materialschicht (12) für das Herstellen eines Schichtstapels zur generativen Bauteilfertigung;
wobei das Erzeugen der Materialschicht (12) umfasst:
- Aufbringen einer ersten Schichtkomponente (201); und
- Aufbringen einer zweiten Schichtkomponente (202, 301, 302), wobei mittels wenigstens einer der Schichtkomponenten (201, 202, 301, 302) eine ortsselektive Verfestigung der Materialschicht (12) erzeugbar ist; und wobei das Erzeugen der Materialschicht (12) ferner wenigstens eine der folgenden Maßnahmen umfasst von:
a) Aufbringen der ersten Schichtkomponente (201) unter Füllen zumindest eines Anteils einer Schichtebene (E) der zu erzeugenden Materialschicht (12) und Aufbringen der zweiten Schichtkomponente (202, 301, 302) auf denselben Anteil, wobei wenigstens die zweite Schichtkomponente (202, 301, 302) in festem Zustand vorliegt;
b) Aufbringen der ersten Schichtkomponente (201) unter nicht vollständigem Füllen einer Schichtebene (E) der zu erzeugenden Materialschicht (12) und Aufbringen der zweiten Schichtkomponente (202, 301, 302) in wenigstens einen ungefüllten Anteil (18) der Schichtebene (E).

2. Verfahren nach Anspruch 1,
wobei wenigstens eine von erster und zweiter Schichtkomponente (201, 202, 301, 302) pulverförmig ist; und /oder
wobei wenigstens eine von erster und zweiter Schichtkomponente (201, 202, 301, 302) einen plattenförmigen Materialabschnitt umfasst.

3. Verfahren nach Anspruch 1 oder 2,
wobei das Aufbringen von wenigstens einer der Schichtkomponenten (201, 202, 301, 302) umfasst:
- gleichzeitiges Aufbringen dieser Schichtkomponente (201, 202, 301,302) an wenigstens zwei beabstandeten Positionen innerhalb der Schichtebene (E); und/oder
- gleichzeitiges Aufbringen dieser Schichtkomponente (201, 202, 301, 302) an der Mehrheit von oder an sämtlichen vorgesehenen Positionen innerhalb der Schichtebene (E).

4. Verfahren nach einem der vorangehenden Ansprüche,
wobei die Schichtkomponente (201, 202, 301, 302) von einer Aufbringvorrichtung (14) mit einer örtlichen Verteilung aufgenommen wird und unter Aufrechterhaltung dieser örtlichen Verteilung aufgebracht wird.

5. Verfahren nach Anspruch 4,
wobei die Aufbringvorrichtung (14) die Schichtkomponente mittels elektrostatischer Anziehungskräfte und/oder mittels Unterdruck aufnimmt.

6. Verfahren nach Anspruch 4 oder 5,
wobei die Aufbringvorrichtung (14) nach Aufbringen der Schichtkomponente (201, 202, 301, 302) eine weitere Menge der Schichtkomponente zum Erzeugen einer weiteren Materialschicht (12) aufnimmt, während das Erzeugen der zu erzeugenden Materialschicht (12) noch nicht abgeschlossen ist.

7. Verfahren nach einem Ansprüche 4 bis 6,
wobei für wenigstens eine der Schichtkomponenten (201, 202, 301, 302) eine Mehrzahl von Aufbringvorrichtungen (14) bereitgestellt ist.

8. Verfahren nach einem Ansprüche 4 bis 7,
wobei die erste Schichtkomponente (201) und die zweite Schichtkomponente (202, 301, 302) mit derselben Aufbringvorrichtung (14) aufgebracht werden; oder
wobei die erste Schichtkomponente (201) mit wenigstens einer ersten Aufbringvorrichtung (14) und die zweite Schichtkomponente (202, 301, 302) mit wenigstens einer zweiten Aufbringvorrichtung (14) aufgebracht wird.

9. Verfahren nach einem der vorangehenden Ansprüche, ortsselektives Verfestigen der erzeugten Materialschicht (12) durch Wärmezufuhr.

10. Verfahren nach Anspruch 9,
wobei das Verfestigen schichtweise erfolgt oder nach Herstellung mehrerer oder sämtlicher Materialschichten (12) des Schichtstapels.

11. Verfahren nach einem der vorangehenden Ansprüche,
wobei wenigstens eine der Schichtkomponenten (201, 202, 301, 302) wenigstens eines der folgenden Materialien umfasst:
- ein Metall;
- ein keramisches Material;
- ein anorganisches Material;
- einen Kunststoff;
- ein organisches Material;
- einen Mehrkomponentenwerkstoff.

12. Verfahren nach einem der vorangehenden Ansprüche,
wobei die erste und zweite Schichtkomponente (201, 202, 301, 302) im Vergleich unterschiedliche Materialien umfassen; und/oder
wobei die erste und zweite Schichtkomponente (201, 202, 301, 302) wenigstens ein gleichartiges Material umfassen, dessen Materialform und/oder Partikelform und/oder Partikelgrößenverteilung voneinander unterschiedlich ist.

13. Vorrichtung (10) zum Erzeugen einer Materialschicht (12) für das Herstellen eines Schichtstapels zur generativen Bauteilfertigung;
wobei die Vorrichtung (10) dazu eingerichtet ist, eine erste Schichtkomponente (201) aufzubringen und eine zweite Schichtkomponente (202, 301, 302) aufzubringen, wobei mittels wenigstens einer der Schichtkomponenten (201, 202, 301, 302) eine ortsselektive Verfestigung der Materialschicht (12) erzeugbar ist;
und wobei die Vorrichtung (10) für wenigstens eine der folgenden Maßnahmen eingerichtet ist:
a) Aufbringen der ersten Schichtkomponente (201) unter Füllen zumindest eines Anteils einer Schichtebene (E) der zu erzeugenden Materialschicht (12) und Aufbringen der zweiten Schichtkomponente (202, 301, 302) auf denselben Anteil, wobei wenigstens die zweite Schichtkomponente (202, 301, 302) in festem Zustand vorliegt;
b) Aufbringen der ersten Schichtkomponente (201) unter nicht vollständigem Füllen einer Schichtebene (E) der zu erzeugenden Materialschicht (12) und Aufbringen der zweiten Schichtkomponente (202, 301, 302) in wenigstens einem ungefüllten Anteil (18) der Schichtebene (E).
